Europäisches Patentamt

European Patent Office

Office européen des brevets

(11) Veröffentlichungsnummer: **0 210 202 B1**

(19)

# EUROPÄISCHE PATENTSCHRIFT

(45) Veröffentlichungstag der Patentschrift: **13.06.90**

(51) Int. Cl.⁵: **G 01 N 29/04**

(21) Anmeldenummer: **86900738.5**

(22) Anmeldetag: **21.01.86**

(86) Internationale Anmeldenummer:
**PCT/DE86/00017**

(87) Internationale Veröffentlichungsnummer:
**WO 86/04415 31.07.86 Gazette 86/17**

(54) PROBEKÖRPER FÜR ULTRASCHALLPRÜFUNG.

(30) Priorität: **25.01.85 DE 3502454**

(43) Veröffentlichungstag der Anmeldung:
**04.02.87 Patentblatt 87/06**

(45) Bekanntmachung des Hinweises auf die
Patenterteilung:
**13.06.90 Patentblatt 90/24**

(84) Benannte Vertragsstaaten:
**BE CH DE FR GB IT LI**

(56) Entgegenhaltungen:
**DE-B-2 814 336**
**US-A-4 331 021**
**US-A-4 466 270**

**Patents Abstracts of Japan, Band 9, Nr. 93,
(P-351)(1816),23. April 1985 & JP-A-59221662**

(73) Patentinhaber: **MTU MOTOREN- UND
TURBINEN-UNION MÜNCHEN GMBH
Dachauer Strasse 665 Postfach 50 06 40
D-8000 München 50 (DE)**

(72) Erfinder: **FEIST, Wolf-Dieter
Dorfstrasse 30a
D-8061 Rettenbach (DE)**
Erfinder: **PODLECH, Manfred
Am Eichenberg 20a
D-8061 Hebertshausen (DE)**
Erfinder: **GOLLWITZER, Johann
Karl-von-Freyberg-Strasse 13
D-8069 Jetzendorf (DE)**

Courier Press, Leamington Spa, England.

**Beschreibung**

Die Erfindung bezieht sich auf einen Probekörper mit mindestens einem Einatz, der einen Testfehler oder -reflektor bestimmte Art, Lage und Größe, zur Prüfung beziehungsweise Eichung von Ultraschallprüfgeräten oder -prüfkörpern bildet, der in den eigentlichen Probekörper eingebettet ist und der eine Reflexionsfläche zur Erzeugung eines Ultraschall-Echos aufweist (Oberbegriff des Patentanspruchs 1). Ein derartiger Probekörper ist aus dem später noch näher erörterten Stand der Technik gemäß der DE—B—2814336 oder der US—A—4331021 bekannt.

Der Erfindung ist zur Anwendung in der zerstörungsfreien Materialprüfung vorgesehen.

Zum Kalibrieren von Ultraschallprüfgeräten und/oder Probeköpfen und zum Nachweise der Fehlererkennbarkeit werden hierzu sehr kleine Testreflektoren oder Testfehler benötigt. Bekannt sind z.B. Kreisscheibenreflektoren in Form von Sackbohrungen mit flachem Boden. Solche Bohrungen lassen sich jedoch, besonders wenn der Boden flach sein soll, nicht beliebig klein herstellen.

Andererseits ist es mit zunehmender Ausschöpfung der Festigkeitspotentiale neuer Werkstoffe, wie z.B. Pulvermetall-Superlegierungen oder hochfester Keramik, notwendig, immer kleinere Werkstoffehler zu detektieren. Damit ist eine Miniaturisierung der Ultraschallprüftechnik erforderlich.

Der aus der DE—B—2 814 336 bekannte Fall behandelt einen zwecks Ultraschalluntersuchung vorgesehenen Beschallungs-Grundkörper, der aus einem Kompaktmaterial, vorzugsweise Kunststoff-Gußmaterial, bestehen soll, das in bezug auf einen vorgebbaren Ultraschall-Frequenzbereich weitgehend dieselben frequenzabhängigen Dämpfungseigenschaften wie ein zu untersuchendes Objekt, z.B. biologisches Gewebe, aufweisen soll, wobei im Grundkörper Reflexionsmaterial nach fest vorgebbaren geometrischen Konfigurationen eingelassen sein soll.

Dabei kann in einen aus einzelnen Schichten zusammengesetzten Grundkörper kornartiges Reflexionsmaterial eingegossen sein, und zwar z.B. im Sinne pro Schicht zunehmender Korngröße und Reflexionseigenschaft. Weiter können im bekannten Fall in den Grundkörper kegelartige Stifte oder Kugeln eingegossen sein, die am äußeren Umfang mit in verlangter örtlicher Verteilung angeordneten warzenartigen Streukörpern (Reflektoren) ausgebildet sein können; dies alles im Sinne von Simmullationsmodellen menschlicher Organgewebe (Leber, Adern, Drüsen).

Die US—A—4,331,021 behandelt Ultraschall-Analysen menschlichen oder tierischen Gewebes, bei der ein Probekörper aus einem derartigen Gewebe nachempfundenen Gel besteht, in das vorzugsweise aus einem gleichen Gel gefertigte Kontrastkörper als Streufeldgeneratoren in jeweils gleicher, insbesondere in von einer Seite des Körpers nach der gegenüberliegender Seite hin sich z.B. kegelartig erweiternder Formgebung, gegebenenfalls stufenartig im Durchmesser zunehmend, angeordnet sein sollen. Dabei sollen unterschiedlich Schall-Streueigenschaften zwischen den Kontrastkörpern durch unterschiedliche Dichten von Streupartikeln im jeweiligen Kontrastkörper jeweils für unterschiedliche Gewebestrukturen repräsentativ sein, die sich jeweils wiederum von der vom Probekörper definieren Gewebestruktur unterscheiden sollen. Dabei sollen besagte Kontrastkörper aus in das Gel für den Probekörper eingesetzen, entsprechend angepaßten Formen bereitgestellt werden, die unter Belassung kegelförmiger Kammern — nach Fertigbildung der Gels für den Probekörper — entfernt werden sollen, um schließlich die Kammern mit dem für die Kontrastkörperstruktur repräsentativen Gel füllen zu können.

Die US—A—4 466 270 behandelt einen Ultraschallprüfling mit einer Testfläche auf der einen Seite und einem an der gegenüberliegenden Seite bzw. Prüfseite angeordneten Ultraschallabsorber, der durch Eingriff eines Zapfens in eine vorgefertigtes Loch (Bohrung) gegenüber dem Prüfung kalibriert werden soll. Dabei soll der Absorber z.B. als auf die Flächengeometrie des Prüflings abgestimmter Abschnitt durch Löten oder gußartig mit letztern verbunden werden.

Im Rahmen des zuvor erörterten Standes der Technik ist es praktisch nicht möglich, im Rahmen der Werkstofftechnik und -prüfung hochfeine Einsätze mit extrem kleinen Reflexionsflächen in möglichst genauer reproduzierbarer Anordnung und möglichst zerstörungsfrei in einen auf verhältnismäßig einfacher Weise herstellbaren Probekörper einzubinden.

Aufgabe der Erfindung ist es, einen Probekörper nach der eingangs genannten Art anzugeben, der bei einfacher Herstellbarkeit den Einschluß sehr kleiner Testfehler (-reflektoren) mit $\varnothing \leq 0,5$ mm — auch in beliebiger Form — hinsichtlich Lage und Schallverhalten genaustens reproduziert macht.

Die gestellte Aufgabe ist gemäß Patentanspruch 1 erfindungsgemäß gelöst.

Die Erfindung ermöglicht es, einen Probekörper mit reproduzierbaren, geometrisch in engen Grenzen definierten Ersatzfehlern und/oder Erstazreflektoren (Einsätzen) der Größenordnung von etwa 0,01 bis 0,05 mm herzustellen. Weiter ermöglicht die Erfindung, den Reflektor in nahezu beliebig reproduizierbaren Formen herzustellen und damit verbundene Einflüsse auf das Ultraschallsignal zu ermitteln. Der Probekörper ist dabei aus einem Metallpulver, intermetallischen Phasen oder aus einen Keramikpulver hergestellt. Vorteilhafte Ausgesteltungen der Erfindung sind in den Patentansprüche 2 bis 9 angegeben.

Ein Ausführungsbeispiel der Erfindung ist in der beigefügten Zeichnung rein schematisch dargestellt.

Es zeigen:

Fig. 1 den Probkörper mit darin angeordnetem Einsatz, als Längsschnitt dargestellt,

Fig. 2 die Einzelheit A aus Fig. 1 in vergrößerter Darstellung und

Fig. 3a) bis h) verschieden Gestaltungen der Reflektoroberfläche.

Der Probekörper 1 — hier ein Preßkörper — ist in einer Kapsel 2 enthalten. Diese weist ein Füllrohr 3 auf, in die Metallpulver, z.B. aus einer Ni-Basislegierung, vorteilhafte Korngröße <100 μm, eine intermetallische Phase oder ein Keramikpulver eingefüllt wird. Das Füllrohr 3 wird mit dem Deckel zusammen nach Beendigung eines heiß- oder kaltisostatischen Preßvorganges wieder entfernt, z.B. abgeschliffen; die Schlifffläche bildet dann die spätere Probenkörperoberfläche 4 aus. Im Bodenbereich des Probekörpers 1 ist ein Einsatzhalter 5 mit einem Einsatz 6, z.B. einem Quarzstab, befestigt. Der Einsatz 6 weist z.B. eine zur Probekörperoberfläche 4 in paralleler Ebene liegende Reflexionsfläche 7 auf; die Reflexionsfläche 7 ist dabei also der Oberfläche 4 zugekehrt, die zugleich Anlagefläche eines Prüfkopfes bei der Ultraschallprüfung ist; die Reflexionsfläche 7 weist einen festen Abstand zur Oberfläche des Probenkörpers 1 auf. Mit Hilfe dieses Ersatzreflektors oder Ersatzfehlers lassen sich die gewünschten Prüfungen an Ultraschallgeräten durchführen. Die Einschallrichtung verläuft im dargestellten Ausführungsbeispiel von oben nach unten, wobei die Wellenfronten in zur Achse des Probekörpers senbrechten Ebenen verlaufen; der Probekörper wird dabei überlicherweise in eine Flüssigkeit eingetaucht.

Beispiel eines Herstellverfahrens für den Probekörper:

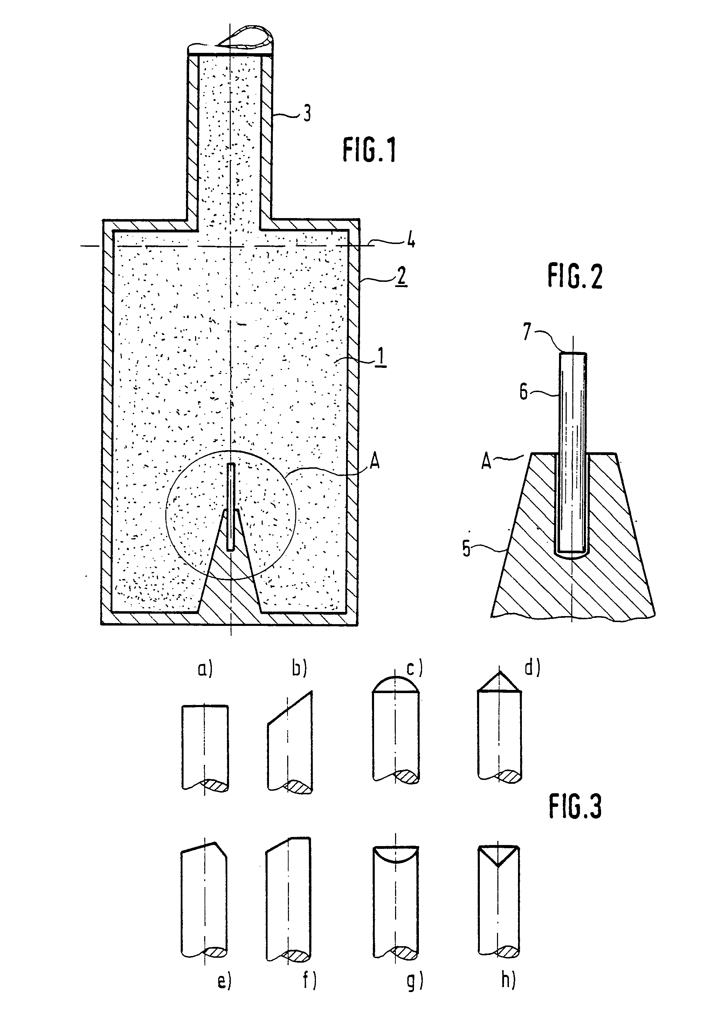

Der mindestens eine Einsatz 6 aus die Ultraschallprüfung nicht störendem Material wie Quarzglas oder synthetischem Diamant, Saphir in Stab-, Nadel- oder Faserform von etwa 10—100 μm ∅, stückig bzw. partikular und mit beliebiger Oberflächenausbildung (siehe Fig. 3), wird in definierter geometrischer Lage gemäß Fig. 1 in der Kapsel 2 aus Eisen festgehalten mittels der Halterung 5 am Boden derselben, z.B. in einem Abstand von 1 bis 10 mm zur Probenkörperoberfläche 4, wenn die Kapsel 2 etwa einen Durchmesser von 20 mm und etwa eine Länge von 30 bis 60 mm aufweist.

Danach wird das Metallpulver durch das Füllrohr 3 bzw. einen Fülltrichter in die Kapsel 2 eingebracht. Dabei darf sich der Einsatz 6 in der vorher definierten Lage nicht verschieben. Deshalb ist die Halterung 5 für den Einsatz 6 an der Kapsel 2, insbesondere am Kapselboden, mit Vorteil kegelförmig gestaltet, so daß keine einseitigen Kräfte während eines z.B. kalt- oder heißisostatischen Preßvorgangs auf den Einsatz 6 einwirken können. Während des Füllvorganges des Kapsel 2 mit dem Pulvermaterial ist die Kapsel mit Vorteil evakuiert, danach wird sie verschlossen, z.B. wenn die Kapsel aus Metall besteht, durch Verschweißen. Das Pulver kann auch unter Umgebungsbedingungen eingefüllt und danach — erst vor dem Verschließen der Kapsel 2 — innerhalb derselben evakuiert werden. Danach wird mit dem Preßvorgang begonnen. Zusätzlich können sich an den Preßvorgang noch eine oder mehrere Wärmebehandlungsstufen anschließen.

Danach erfolgt das Entkapseln durch Abtrennen des Füllrohrs 3 nebst Deckel. Die Sollänge des Probekörpers 1 wird über der Oberfläche durch ein an sich bekanntes Bearbeitungsverfahren eingestellt. Der Einsatz 6 muß fest umschlossen sein.

Der Probekörper 1 besteht aus einem Material, das dem zu prüfenden Werkstoff bzw. Werkstück gleich oder ähnlich ist. Notwendig ist es, solche Materialien bzw. Materialgruppen zu verwenden, die nach einem pulvermetallurgischen Verfahren verarbeitbar sind.

Die Werkstoffauswahl für den oder die Einsätze, z.B. Stab, Nadeln und Fasern, richtet sich nach der Prozeßtemperatur, insbesondere HIP-Temperatur (HIP = hipisostatisches Cresson) des Probekörperwerkstoffes und nach den gewünschten Schallimpedanzunterschieden. z.B. läßt sich Quarz beim Einsatz von Nickelbasislegierungen gut verwenden. Bei der HIP-Temperatur für eine solche Legierung ist der Einsatz so fest, daß die Form erhalten bleibt und ein ausreichender Impedanzunterschied zum umgehenden Werkstoff aus der Legierung besteht. Es können jedoch auch andere entsprechende geeignete Materialparrung gewählt werden.

Bei der Ultraschallprüfung wird bevorzugt ein hochauflösender und im Verhältnis zur gewünschten Auflösung hochfokussierender Prüfkopf entsprechender Wellenlänge und entsprechender Leistung, z.B. zwischen etwa 5 und 50 MHz, insbesondere 25 MHz, eingesetzt. Der nicht dargestellte Prüfkopf wird an der zuletzt auf Maß (Sollänge) geschliffenen Oberfläche 4 des eingetauchten Probekörpers 1 zur Anlage gebracht.

## Patentansprüche

1. Probekörper mit mindestens einem Einsatz (6), der einen Testfehler oder -reflektor bestimmter Art, Lage und Größe zur Prüfung beziehungsweise Eichung von Ultraschallprüfgeräten oder -prüfköpfen bildet, der in den eigentlichen Probekörper (1) eingebettet ist und der eine Reflexionsfläche (7) zur Erzeugung eines Ultraschall-Echos aufweist, dadurch gekennzeichnet, daß der mindestens eine Einsatz (6) verschiebungssicher an einem Einsatzhalter (5) angebracht ist und mit seiner größten Längsausdehnung in Einschallrichtung angeordnet ist, daß die Reflexionsfläche (7) nicht größer als etwa 0,2 mm² ist und der Oberfläche (4) des Probekörpers zugekehrt ist, die für die Anlage des Prüfkopfes bei der Ultraschallprüfung vorgesehen ist, daß diese Reflexionsfläche (7) zur genannten Oberfläche (4) einen festen Abstand aufweist und daß der Probekörper nach einem pulvermetallurgischen Verfahren hergestellt ist und den genannten Einsatz (6) samt Einsatzhalter (5) eingepreßt enthält.

2. Probekörper nach Anspruch 1, dadurch gekennzeichnet, daß die Reflexionsfläche in Schallrichtung konvex oder konkav ist.

3. Probekörper nach Anspruch 1 oder 2, dadurch gekennzeichnet, daß er durch isostatisches Kalt- und/oder Heißpressen hergestellt ist.

4. Probekörper nach Anspruch 3, dadurch gekennzeichnet, daß er aus pulversierbarem Metall, intermetallischen Phasen oder Keramiken besteht.

5. Probekörper nach Anspruch 3, dadurch gekennzeichnet, daß er den Einsatz bzw. die Einsätze in Stab-, Nadel- oder Faserform eingepreßt enthält.

6. Probekörper nach Anspruch 5, dadurch gekennzeichnet, daß die Einsätze aus Quarzglas, Diamant oder Saphir bestehen.

7. Probekörper nach Anspruch 1, dadurch gekennzeichnet, daß die Einsätze an ihrer Spitze rotationssymetrisch — vorzugsweise kegelig — gestaltet sind.

8. Probekörper nach Anspruch 1, dadurch gekennzeichnet, daß die Reflexionsfläche eine unsymmetrische Gestalt aufweist.

9. Probekörper nach Anspruch 1, dadurch gekennzeichnet, daß die Reflexionsfläche aus — vorzugsweise ungleichen — schrägen Teilflächen zusammengesetzt ist.

**Revendications**

1. Eprouvette ayant au moins une garniture (6) avec un défaut d'essai ou de réflexion de type déterminé, de position et de dimension pour contrôler ou tarer des appareils de contrôle aux ultrasons ou des sondes de contrôle et qui sont noyés dans l'éprouvette (1) proprement dite et présentent une surface de réflexion (7) pour créer un écho d'ultrasons, éprouvette caractérisée en ce qu'au moins une garniture est fixée solidairement en translation à un support de garniture (5) et son extension longitudinale la plus grande correspond à la direction d'entrée du son, la surface de réflexion (7) n'est pas supérieure à environ 0,2 mm² et est tournée vers la surface superieure (4) du corps de l'éprouvette, surface qui est prévue pour appliquer la tête de contrôle au cours d'un contrôle aux ultrasons, cette surface de réflexions (7) étant distante de la surface supérieure (4) d'une distance fixe et l'éprouvette est réalisée selon un procédé de la métallurgie des poudres pour maintenir la garniture (6), mentionnée y compris le support (5).

2. Eprouvette selon la revendication 1, caractérisée en ce que la surface de réflexion est convexe ou concave dans la direction du son.

3. Eprouvette selon la revendication 1 ou 2, caractérisée en ce qu'elle est réalisée par pressage isostatique à froid et/ou à chaud.

4. Eprouvette selon la revendication 3, caractérisée en ce qu'elle est formée en un métal pulvérisable, en des phases intermétalliques ou des céramiques.

5. Eprouvette selon la revendication 3, caractérisée en ce qu'elle contient la ou les garnitures sous la forme de tiges, d'aiguilles ou de fibres intégrées par pressage.

6. Eprouvette selon la revendication 5, caractérisée en ce que les garnitures sont en verre ou quartz, en diamant ou un saphir.

7. Eprouvette selon la revendication 1, caractérisée en ce que la pointe des garnitures présente une symétrie de rotation de préférence une forme conique.

8. Eprouvette selon la revendication 1, caractérisée en ce que la surface de réflexion a une forme asymétrique.

9. Eprouvette selon la revendication 1, caractérisée en ce que la surface de réflexion est composés de surfaces partielles inclinées, de préférence irrégulières.

**Claims**

1. Test body comprising at least one insert (6) which constitutes a test fault or reflector of a specific type, position and size for the testing or calibration of ultrasonic testing equipment or test heads, the insert being embedded in the actual test body (1) and comprising a reflective surface (7) for generating an ultrasonic echo, characterised in that at least one insert (6) is mounted on an insert support (5) in such a way that it is secure against movement and has its greatest longitudinal extension disposed in the direction of acoustic irradiation and in that the reflective surface (7) is no larger that about 0.2 mm² and faces the surface (4) of the test body against which the test head is to be applied during ultrasonic testing and in that this reflective surface (7) is at a fixed distance from the said surface (4) and in that the test body is produced by a powder-metallurgical process and contains the said insert (6) pressed into it together with the insert holder (5).

2. Test body according to Claim 1, characterised in that the reflective surface is convex or concave in the acoustic direction.

3. Test body according to Claim 1 or 2, characterised in that it is produced by isostatic cold and/ or hot pressure moulding.

4. Test body according to Claim 3, characterised in that it consists of pulverisable metal, intermetallic phases or ceramics.

5. Test body according to Claim 3, characterised in that it contains the insert or inserts pressed into it in the form of rods, needles or fibres.

6. Test body according to Claim 5, characterised in that the inserts consist of quartz glass, diamond or sapphire.

7. Test body according to Claim 1, characterised in that the inserts are rotationally symmetrical — preferably conical — at their tip.

8. Test body according to Claim 1, characterised in that the reflective surface has an asymmetrical form.

9. Test body according to Claim 1, characterised in that the reflective surface consists of preferably unequal oblique partial surfaces.

FIG.1

FIG.2

FIG.3

a) b) c) d)

e) f) g) h)